# EUROPÄISCHE PATENTSCHRIFT

(11) **EP 1 240 631 B1**
(45) Veröffentlichungstag und Bekanntmachung des Hinweises auf die Patenterteilung: **04.06.2003**
(21) Anmeldenummer: 99959166.2
(22) Anmeldetag: 23.12.1999
(51) Int. Cl.: G07F 19/00

(54) **ZAHLUNGSTRANSAKTIONSVERFAHREN UND ZAHLUNGSTRANSAKTIONSSYSTEM**
PAYMENT TRANSACTION METHOD AND PAYMENT TRANSACTION SYSTEM
PROCEDE ET SYSTEME DE TRANSACTION DE PAIEMENT

(43) Veröffentlichungstag der Anmeldung: 18.09.2002
(73) Patentinhaber: Swisscom Mobile AG, 3050 Bern (CH)
(72) Erfinder: RITTER, Rudolf, CH-3052 Zollikofen (CH); SCHLEGEL, Georges, CH-4515 Oberdorf (CH)
(74) Vertreter: BOVARD AG - Patentanwälte
(86) Internationale Anmeldenummer: CH9900622
(87) Internationale Veröffentlichungsnummer: WO01048714

(56) Entgegenhaltungen:
- EP-A- 0 708 547
- WO-A-98/11519
- WO-A-98/34203
- WO-A-98/37524
- US-A- 5 986 565

## Beschreibung

Die vorliegende Erfindung betrifft ein Zahlungstransaktionsverfahren und ein Zahlungstransaktionssystem. Insbesondere betrifft die vorliegende Erfindung ein Zahlungstransaktionsverfahren gemäss dem überbegriff des unabhängigen Verfahrensanspruchs 1 und ein Zahlungstransaktionssystem zur Ausführung dieses Zahlungstransaktionsverfahrens.

Durch die zunehmende Beliebtheit und Verbreitung der mobilen Telefonie sind immer mehr Kunden von Dienststellen, sogenannte Points of Sale (POS), beispielsweise Verkaufsstellen von Produkten und/oder Dienstleistungen, mit tragbaren Mobilgeräten ausgerüstet, nämlich Mobilfunktelefone, die die Identifizierung und Authentifizierung eines betreffenden Kunden unterstützen. Da für die Bezahlung von Produkten und/oder Dienstleistungen bei der Dienststelle immer häufiger bargeldlose Zahlungsformen verwendet werden und die Kunden für diesen Zweck von den verschiedenen Dienststellen mit zahlreichen verschiedenen Identifizierungskarten ausgerüstet werden, bestand der Wunsch, für diesen Zweck die oben genannten tragbaren Mobilgeräte einzusetzen. Gebräuchliche Mobilfunktelefone umfassen ein ldentifizierungsmodul, eine sogenannte SIM-Chipkarte (Subscriber Identification Module), welches eine eindeutige Benutzeridentifizierung enthält, beispielsweise eine IMSI (International Mobile Subscriber Identity), mittels welcher der betreffende Benutzer in einem Telekommunikationsnetz identifiziert werden kann. Um die Benutzung eines solchen Mobilgeräts durch einen unbefugten Benutzer zu verhindem, muss sich ein Benutzer vorerst beim Mobilgerät authentifizieren, beispielsweise indem er mittels Bedienungselementen des Mobilgeräts einen persönlichen Code (Personal Identification Number, PIN) eingibt, der unter Zuhilfenahme von Sicherheitsdiensten mit einem auf der SIM-Chipkarte gespeicherten Wert verglichen wird.

in der Patentanmeldung EP 708 547 A2 wird die Verwendung eines Mobilfunktelefons als authentifizierter Transaktionskontroller beschrieben. Gemäss der in EP 708 547 A2 offenbarten Lehre authentifiziert sich ein Kunde in einem Verkaufsgeschäft zunächst bei seinem Mobilfunktelefon, beispielsweise durch Eingabe eines persönlichen Identifizierungscodes, danach vereinbaren der Geschäftsbetreiber und der Kunde ein Transaktionspasswort, welches vom Kunden in sein Mobilfunktelefon eingegeben und zusammen mit Identifizierungsdaten, beispielsweise die Gerätenummer und die Telefonnummer des Mobilfunktetefons, drahtlos an einen Empfänger eines Bezahlungsterminals des Verkaufsgeschäfts übermittelt wird. Gemäss der in EP 708 547 A2 offenbarten Lehre werden dann vom Verkaufsgeschäft der betreffende zu bezahlende Geldbetrag, der entweder vom Bezahlungsterminal bezogen wird oder vom Kunden in sein Mobilfunktelefon eingegeben und zusammen mit dem Transaktionspasswort und den Identifizierungsdaten an den Empfänger des Bezahlungsterminals übertragen wird, und die Identifizierungsdaten zur Kreditüberprüfung an ein Kreditzentrum weitergeleitet. Das in EP 708 547 A2 beschriebene Transaktionspasswort ermöglicht insbesondere, dass das Bezahlungsterminal die vom Mobilfunktelefon übermittelten Daten der betreffenden Transaktion zuordnen kann und dadurch nicht durch eventuelle Übermittlungen von anderen Mobilfunktelefonen beeinträchtigt wird.

Dokument WO9837524 offenbart ebenfalls ein Transaktionsverfahren mit einem Mobilgerät. Die Implementierung der Kontaktstelle zwischen Händlerterminal und Kunden-Mobiltelefon sowie die Anbindung des Händlerterminals zum Finanzserver mittels eines Telekommunikationsnetzes entspricht der der vorliegenden Erfindung. Jedoch wird ein anderes Zahlungsprotokoll verwandt.

Es ist eine Aufgabe dieser Erfindung, ein neues Zahlungstransaktionsverfahren und ein neues Zahlungstransaktionssystem vorzuschlagen, welche insbesondere für Dienststellen mit einem oder mehreren Bezahtungsterminais und mit einem oder mehreren mit Mobilgeräten ausgerüsteten Kunden eingesetzt werden können.

Gemäss der vorliegenden Erfindung wird dieses Ziel insbesondere durch die Merkmale der unabhängigen Ansprüche erreicht. Weitere vorteilhafte Ausführungsformen gehen ausserdem aus den abhängigen Ansprüchen und der Beschreibung hervor.

Dieses Ziel wird durch die vorliegende Erfindung insbesondere dadurch erreicht, dass in den Zahlungstransaktionen zwischen einem Kunden mit einem tragbaren Mobilgerät, beispielsweise ein Mobilfunktelefon oder ein kommunikationsfähiger Palm- oder Laptop-Computer, und einer Dienststelle mit mehreren Bezahlungsterminals, in welchen Zahlungstransaktionen ein Bezahlungsterminal der Dienststelle den Kunden über einen zu bezahlenden Transaktionstotalbetrag und eine diesem Transaktionstotalbetrag zugeordnete Transaktionsidentifizierung informiert und der Kunde die Transaktionsidentifi-zierung dem Mobilgerät angibt, das Mobilgerät die vom Kunden angegebene Transaktionsidentifizierung über ein Mobilfunknetz, beispielsweise ein GSModer ein UMTS-Netz oder ein anderes, beispielsweise satellitenbasiertes, Mobilfunknetz, an eine Transaktionszentrale übermittelt, dass das Bezahlungsterminal den Transaktionstotalbetrag und die Transaktionsidentifizierung über ein Kommunikationsnetz, beispielsweise ein oben genanntes Mobilfunknetz oder ein Festnetz, an diese Transaktionszentrale übermittelt, und dass die Transaktionszentrale eine Bezahlungsaufforderung, die mindestens den Transaktionstotalbetrag und beispielsweise die Transaktionsidentifizierung umfasst, über das Mobilfunknetz an das Mobilgerät übermittelt, von welchem Mobilgerät die Transaktionsidentifizierung übermittelt wurde.

Im erfindungsgemässen Zahlungstransaktionsverfahren und Zahlungstransaktionssystem wird also eine Zahlungstransaktion zwischen einem Kunden mit einem tragbaren Mobilgerät und einer Dienststelle, beispielsweise ein sogenannter Point of Sale (POS), mit mehreren Bezahlungsterminals in zwei Phasen durchgeführt. In der ersten Phase, in der die Transaktionsidentifizierung durch das Bezahlungsterminal bestimmt, bekanntgegeben, vom Kunden seinem Mobilgerät angegeben und vom Mobilgerät sowie vom Bezahlungsterminal an die Transaktionszentrale übermittelt wird, werden das an der betreffenden Zahlungstransaktion beteiligte Bezahlungsterminal und das an der betreffenden Zahlungstransaktion beteiligte Mobilgerät in der Transaktionszentrale einander zugeordnet. Dabei findet zwischen dem Bezahlungsterminal und dem Mobilgerät keine direkte Kommunikation statt, was den Vorteil hat, dass weder das Mobilgerät noch das Bezahlungsterminal mit zusätzlichen entsprechenden Mitteln, beispielsweise eine standardisierte kontaktlose Geräteschnittstelle mit Sender und Empfänger beim Mobilgerät und beim Bezahtungsterminal, ausgerüstet werden müssen, und dass in der Dienststelle Mobilgeräte und/oder Bezahlungsterminals, die nicht an einer betreffenden Zahlungstransaktion beteiligt sind, nicht irrtümlicherweise in den kontaktlosen Datenaustausch der betreffenden Zahlungstransaktion einbezogen werden. In der zweiten Phase kann dann zwischen den Zahlungstransaktionspartnem der finanzielle Aspekt der Zahlungstransaktion durchgeführt werden, wobei auch in dieser Phase keine direkte Kommunikation zwischen dem Bezahlungsterminal und dem Mobilgerät stattfindet, da auch der finanzielle Aspekt der Zahlungstransaktion über die Transaktionszentrale abgewickelt wird. Die zweite Phase wird von der Transaktionszentrale eingeleitet, indem die Bezahlungsaufforderung der Zahlungstransaktion an das an der betreffenden Zahlungstransaktion beteiligte Mobilgerät übermittelt wird.

Vorzugsweise wird im Mobilgerät, beispielsweise nachdem die Bezahlungsaufforderung vom betreffenden Kunden mittels Bedienungselementen des Mobilgeräts akzeptiert wurde, ein Bezahlungsbeleg, der eine Verknüpfung der Bezahlungsaufforderung mit einer Kundenidentifizierung des Kunden umfasst, vorbereitet und vom Mobilgerät über das Mobilfunknetz an die Transaktionszentrale übermittelt. Der Bezahlungsbeleg wird, beispielsweise mit einer elektronischen Signatur des Kunden versehen oder als gesichertes Zertifikat ausgeführt. Die Transaktionszentrale, beispielsweise ein Kommunikationsserver, kann den Bezahlungsbeleg weiterverarbeiten und/oder weiterleiten, z.B. an ein Finanzinstitut oder an eine Clearingstelle. Vorteilhafterweise übermittelt die Transaktionszentrale nach dem Erhalt des Bezahlungsbelegs eine Transaktionsbestätigung, die mindestens die Transaktionsidentifizierung umfasst, über das Kommunikationsnetz an das Bezahlungsterminal und je nach Ausführung auch an das Mobilgerät.

Vorzugsweise fügt das Bezahlungsterminal bei der Bestimmung der Transaktionsidentifizierung eine Bezahlungsterminalidentifizierung in die Transaktionsidentifizierung ein, welche Bezahlungsterminalidentifizierung ermöglicht, das betreffende Bezahlungsterminal aus mehreren in der Dienststelle vorhandenen Bezahlungsterminals zu identifizieren. Eine Bezahlungsterminalidentifizierung als Bestandteil der Transaktionsidentifizierung hat überdies den Vorteil, dass in einer Dienststelle mit mehreren Bezahlungsterminals eine eindeutige Transaktionsidentifizierung jeweils durch das betreffende Bezahlungsterminal ohne weitere Koordination mit anderen Einheiten, beispielsweise einer Zentrale oder den anderen Bezahlungsterminals, bestimmt werden kann.

Vorzugsweise fügt das Bezahtungsterminal bei der Bestimmung der Transaktionsidentifizierung eine Dienststellenidentifizierung in die Transaktionsidentifizierung ein, und der Transaktionstotalbetrag wird der durch die Dienststellenidentifizierung bestimmten Dienststelle gutgeschrieben. Eine Dienststellenidentifizierung als Bestandteil der Transaktionsidentifizierung hat überdies den Vorteil, dass Zahlungstransaktionen von einer Vielzahl von Dienststellen über die Transaktionszentrale abgewickelt werden können, wobei die Dienststellen beispielsweise verschiedenen Inhabern, respektive verschiedenen Dienststellenbetreibem, zugeordnet sein können.

In einer Ausführungsvariante werden im Mobilgerät vor der Übermittlung des Bezahlungsbelegs an die Transaktionszentrale Angaben über die Bezahlungsart, beispielsweise Belastung auf eine bestimmte Kreditkartennummer, Belastung auf ein bestimmtes Kundenkonto, Belastung auf ein bestimmtes Bankkonto, oder Belastung auf einen im Mobilgerät gespeicherten vorausbezahlten Geldbetrag, beispielsweise auf der SIM-Karte des Mobilgeräts, in den Bezahlungsbeleg eingefügt. Das Einfügen von Angaben über die beabsichtigte Bezahlungsart hat den Vorteil, dass dadurch die Flexibilität des erfindungsgemässen Zahlungstransaktionsverfahrens und Zahlungstransaktionssystems erhöht wird, und dass je nach Art der gewünschten Bezahlungsart mindestens gewisse Zahlungstransaktionen direkt (on-line) und automatisch verbucht werden können, während andere nachträglich (off-line), beispielsweise unter Zuhilfenahme einer dafür geeigneten Clearingstelle, verbucht werden können.

In einer Ausführungsvariante übermittelt das Bezahlungsterminal die Transaktionsidentifizierung zusätzlich über eine kontaktlose Geräteschnittstelle direkt an das Mobilgerät, und der Kunde gibt die Transaktionsidentifizierung dem Mobilgerät an, indem er die vom Bezahlungsterminal direkt über die kontaktlose Geräteschnittstelle empfangene Transaktionsidentifizierung mittels Bedienungselementen des Mobilgeräts akzeptiert Der Vorteil dieser Ausführungsvariante besteht darin, dass der Kunde die Transaktionsidentifizierung nicht manuell in das Mobilgerät eintippen muss, so dass Eingabefehler und langwierige Dateneingaben durch den Kunden verhindert werden können. Die für diese Ausführungsvariante verwendete kontaktlose Schnittstelle kann in einfacher Form ausgeführt werden, da sie nämlich in einer Minimalvariante nur unidirektional zu sein braucht, das heisst, das Bezahlungsterminal braucht in der Minimalvariante nur mit einem geeigneten Sender zum Abstrahlen der Transaktionsidentifizierung ausgerüstet zu sein, beispielsweise ein Sender zum Abstrahlen von Funk- und/oder infrarotwellen, und die Mobilgeräte müssen in der Minimalvariante nur mit einem geeigneten Empfänger zum Empfangen der Transaktionsidentifizierung ausgerüstet sein, beispielsweise ein Empfänger zum Empfangen von Funk- oder Infrarotwellen. Der Fachmann wird verstehen, dass für die Realisierung dieser Ausführungsvariante auch keine komplexen Kommunikationsprotokolle ausgeführt werden müssen, die beispielsweise bei einer direkten bidirektionalen Kommunikation zwischen dem Mobilgerät und dem Bezahlungsterminal ausgeführt werden müssten. Durch diese Ausführungsvariante wird ermöglicht, dass Kunden mit Mobilgeräten, die über Mittel zum Empfangen der Transaktionsidentifizierung vom Bezahlungsterminal über eine kontaktlose Geräteschnittstelle verfügen, die Transaktionsidentifizierung nicht manuell eintippen müssen, wobei Kunden mit Mobilgeräten ohne solche Mittel nicht vom vorgeschlagenen Verfahren ausgeschlossen werden, da sie die Transaktionsidentifizierung manuell in das Mobilgerät eintippen können.

In einer Ausführungsvariante authentifiziert sich der Kunde bei seinem Mobilgerät beispielsweise mit einem biometrischen Merkmal; zum Beispiel mit einem Fingerabdruck, einem Stimmmuster oder einem Augenmuster. Die Verwendung von biometrischen Merkmalen zur Authentifizierung eines Benutzers hat den Vorteil, dass die damit verbundene Sicherheit höher ist als bei der Verwendung eines persönlichen Codes, der beispielsweise durch unrechtmässige Benutzer erraten oder vom rechtmässigen Benutzer vergessen werden kann.

In einer Ausführungsvariante wird die Solvenz des durch die übermittelte Kundenidentifizierung bestimmten Kunden durch die Transaktionszentrale überprüft. Basierend auf dem Resultat dieser Solvenzprüfung kann die Transaktionszentrale gegebenenfalls eine Meldung an das betreffende Bezahlungsterminal sowie an das betreffende Mobilgerät übermitteln, mittels welcher Meldung dem betreffenden Kunden die Bezahlung der Zahlungstransaktion über das erfindungsgemässe Verfahren wegen mangelnder Solvenz verwehrt wird.

In einer Ausführungsvariante wird der Bezahlungsbeleg und/oder eine Transaktionsbestätigung von der Transaktionszentrale betreffend der erfolgreich abgwickelten Zahlungstransaktion im Mobilgerät gespeichert, beispielsweise auf der SIM-Karte des Mobilgeräts. Der Vorteil der Speicherung von Bezahlungsbelegen und/oder Transaktionsbestätigungen im Mobilgerät besteht darin, dass dem Kunden dadurch ermöglicht wird, über getätigte Zahlungstransaktionen Buch zu führen und einen im Mobilgerät gespeicherten Bezahlungsbeleg, respektive eine Transaktionsbestätigung, als Quittung zu verwenden, insbesondere dann, wenn die im Bezahlungsbeleg enthaltene Bezahlungsaufforderung und/oder die Transaktionsbestätigung ein Zertifikat oder eine elektronische Signatur der betreffenden Dienststelle und/oder der Transaktionszentrale enthält.

Nachfolgend wird eine Ausführung der vorliegenden Erfindung anhand eines Beispieles beschrieben. Das Beispiel der Ausführung wird durch folgende beigelegte Figuren illustriert:
Figur 1 zeigt ein Blockdiagramm, welches schematisch eine Dienststelle darstellt, in der sich mehrere Mobilgeräte und mehrere Bezahlungsterminals befinden, wobei die Mobilgeräte über ein Mobilfunknetz und die Bezahlungsterminals über ein Kommunikationsnetz mit einer Transaktionszentrale verbunden sind.
Figur 2 zeigt ein Zeitdiagramm, welches einen möglichen sequentiellen Ablauf des Informationsflusses zwischen einem Bezahlungsterminal, einer Transaktionszentrale und einem Mobilgerät illustriert.

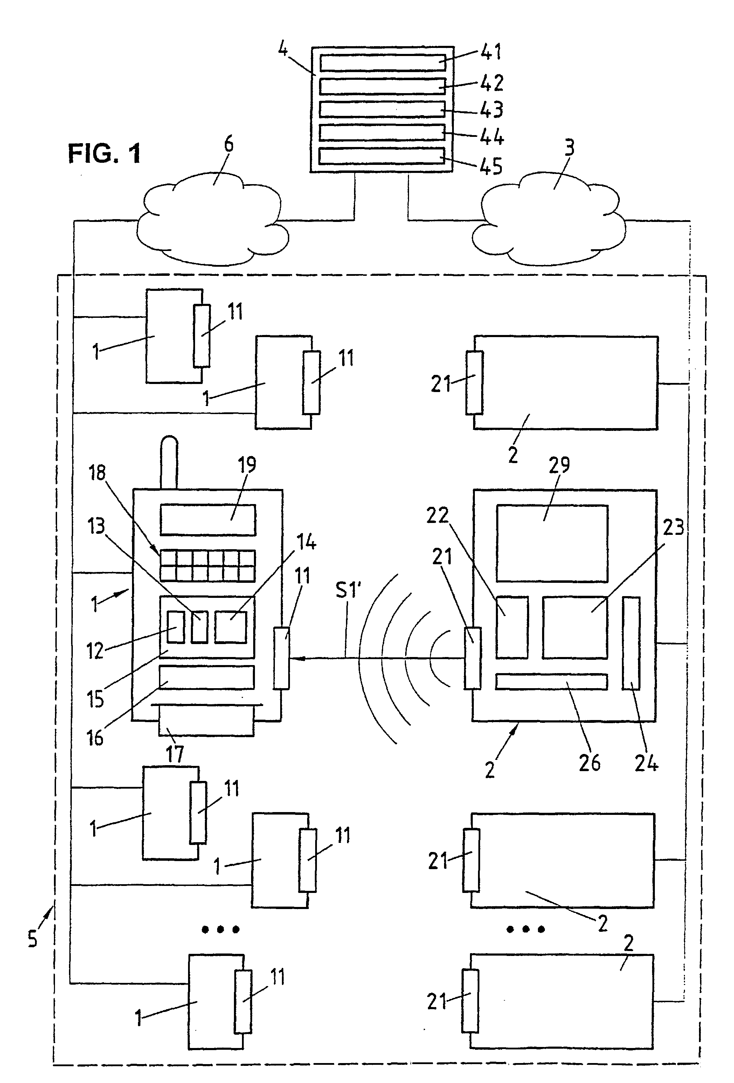

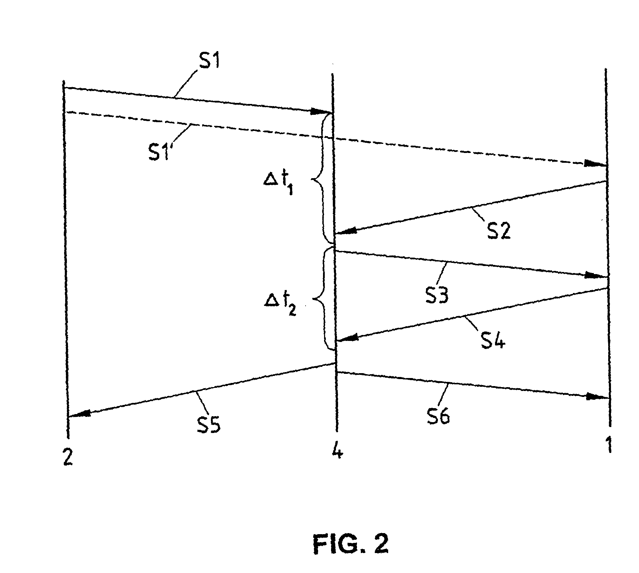

In den Figuren 1 und 2 sind Elemente, die mit einer gleichen Bezugsziffer bezeichnet sind, als gleichwertige Elemente zu betrachten. In der Figur 1 bezieht sich die Bezugsziffer 5 auf eine Dienststelle, einen sogenannten Point of Sale (POS), zum Beispiel eine öffentlich zugängliche Verkaufsstelle von Produkten und/oder Dienstleistungen. Wie in der Figur 1 illustriert wird, befinden sich in der Dienststelle 5 mehrere Bezahlungsterminals 2 und mehrere von Kunden getragene Mobilgeräte 1.

Die tragbaren Mobilgeräte 1 sind beispielsweise Mobilfunktelefone, Laptop- oder Palmtop-Computer oder andere geeignete tragbare Mobilgeräte, die über ein Mobilfunknetz 6, beispielsweise ein GSM- oder ein UMTS-Netz oder ein anderes, beispielsweise satellitenbasiertes, Mobilfunknetz, kommunizieren, das heisst inbesondere auch Daten austauschen, können. Der Datenaustausch über das Mobilfunknetz 6 kann beispielsweise mittels speziellen Meldungen, beispielsweise SMS- (Short Message Service) oder USSD-Meldungen (Unstructured Supplementary Services Data), oder mittels speziellen Datendiensten, beispielsweise GPRS (Generalized Packet Radio Service) oder HSCSD (High Speed Circuit Switched Data), erfolgen.

Der in der vorliegenden Beschreibung verwendete Begriff "Softwaremodul" bezieht sich jeweils auf einen Programmcode, der in einem Speicher gespeichert und auf einem Prozessor ausgeführt wird, beispielsweise in Kooperation mit geeigneten Operationssystemen und/oder unter Zuhilfenahme von Diensten von virtuellen Plattformen, z.B. eine Java Virtual Machine (Java ist ein eingetragenes Warenzeichen von Sun Microsystems), so dass der Prozessor so gesteuert wird, dass er die jeweiligen dem Softwaremodul zugeordneten Funktionen ausführt. Der Fachmann wird verstehen, dass die für die Ausführung der Softwaremodule verwendete Programmiersprache den Sinn der vorliegenden Erfindung nicht verändert, dass aber die Verwendung von gewissen Programmiersprachen, beispielsweise Java oder eine andere objektorientierte und Plattform-unabhängige Programmiersprache, durchaus dem Fachmann bekannte Vorteile ausweisen können. Den Softwaremodulen können Funktionen zugeordnet sein, für deren Ausführung ein betreffendes Softwaremodul Funktionen und/oder Dienste zu Hilfe nimmt, die in einer Ausführung, beispielsweise aus Effizienzgründen, in anderen Modulen lokalisiert sind, die aber gleichwohl auch als funktionale Bestandteile des betreffenden Softwaremoduls zu verstehen sind.

Die Bezahlungsterminals 2 basieren beispielsweise auf herkömmlichen elektronischen Kassensystemen, die zum Beispiel mit nicht dargestellten Bedienungselementen und Preiserfassungskomponenten, z.B. Laserscanners, ausgerüstet sind und mindestens einen Prozessor 26 umfassen. Die Bezahlungsterminals 2 umfassen ein Transaktionsidentifizierungsmodul 22, das beispielsweise als programmiertes Softwaremodul ausgeführt ist, welches für eine Zahlungstransaktion eine Transaktionsidentifizierung bestimmt. Diese Transaktionsidentifizierung enthält vorzugsweise mindestens eine Bezahlungsterminalidentifizierung, welche es ermöglicht, ein betreffendes Bezahlungsterminal 2 unter den mehreren in der Dienststelle 5 vorhandenen Bezahlungsterminals 2 zu bestimmen, eine Dienststellenidentifizierung, sowie eine Transaktionsnummer, die beispielsweise für jede neue Zahlungstransaktion fortlaufend inkrementiert wird und/oder eine Datums-/Zeitangabe umfasst. Die Bezahlungsterminalidentifizierung ist zum Beispiel eine Zahl, zum Beispiel "12", eine Buchstabenfolge, zum Beispiel "BE", oder eine gemischte Folge von Buchstaben und Zahlen, zum Beispiel "K3", die in der Regel auf ein, zwei oder drei Ziffern, respektive Buchstaben beschränkt werden können, um eine eindeutige Identifizierung eines Bezahlungsterminals 2 in einer Dienststelle 5 zu gewährleisten. Die Anzahl Zahlenziffem und/oder Buchstaben der Dienststellenidentifizierung hängt davon ab, wieviele Dienststellen 5 ihre Zahlungstransaktionen über die Transaktionszentrale 4 abwickeln. Die Dienststellenidentifizierung kann beispielsweise so strukturiert sein, dass sie eine Zuweisungsautoritätsidentifizierung umfasst, die die Zuweisungsautorität bestimmt, die die Dienststellenidentifizierung der betreffenden Dienststelle 5 zugewiesen hat, beispielsweise den Betreiber einer Kette von Dienststellen 5, und dass sie eine für diese Zuweisungsautorität eindeutige Dienststellennummer umfasst. Die Dienststellenidentifizierung kann auch für eine internationale Verwendung vorgesehen sein und beispielsweise Länderidentifizierungen und/oder andere geeignete Datenelemente umfassen. Die Anzahl Zahlenziffem und/oder Buchstaben der Transaktionsnummer hängt davon ab wieviele Zahlungstransaktionen in einem vordefinierten Zeitintervall, beispielsweise an einem Tag oder an einem Halbtag, über ein Bezahlungsterminal 2 abgewickelt werden.

Der Fachmann wird verstehen, dass die Dienststellenidentifizierung und die Bezahlungsterminalidentifizierung auch durch eine kombinierte eindeutige Bezahlungsterminalidentifizierung ersetzt werden kann, allerdings ergibt sich dadurch auf Grund der Anzahl benötigter Ziffern eine Transaktionsidentifizierung, die sich nicht für das manuelle Eintippen in das Mobilgerät 1 eignet, überdies würde dadurch eine zentralisierte Verwaltung der Transaktionsidentifizierungen erforderlich.

Die für eine Zahlungstransaktion bestimmte Transaktionsidentifizierung wird vom Bezahlungsterminal 2, beispielsweise vom Transaktionsidentifizierungsmodul 22 oder von einem anderen programmierten Softwaremodul des Bezahlungsterminals 2, zusammen mit dem vom Bezahlungsterminal 2 für diese Zahlungstransaktion bestimmten, vom betreffenden Kunden zu bezahlenden Transaktionstotalbetrag auf einer Anzeige 29 des Bezahlungsterminals 2 angezeigt. Der betreffende Kunde wird dadurch über den Transaktionstotalbetrag und die Transaktionsidentifizierung der Zahlungstransaktion informiert.

Das Bezahlungsterminal 2 umfasst ein Transaktionsaufgabemodul 23, beispielsweise ein programmiertes Softwaremodul, welches, wie in der Figur 2 durch den Pfeil S1 angedeutet wird, die Transaktionsidentifizierung und den Transaktionstotalbetrag der betreffenden Zahlungstransaktion über ein Kommunikationsnetz 3 an die Transaktionszentrale 4 übermittelt. Diese Übermittlung erfolgt beispielsweise automatisch oder erst nach der Eingabe eines entsprechenden Befehls in das Bezahlungsterminal 2 durch Angestellte der Dienststelle 5 oder in einer weiteren Variante erst nachdem das Bezahlungsterminal 2 durch die Transaktionszentrale 4 dazu aufgefordert wird. Das Kommunikationsnetz 3 ist zum Beispiel ein Festnetz, beispielsweise das öffentliche geschaltete Telefonnetz, ein ISDN-Netz, ein Inernet-Netzwerk, oder ein LAN (Local Area Network) oder WAN (Wide Area Network), oder ein Mobilfunknetz, beispielsweise ein GSM- oder ein UMTS-Netz oder ein anderes, beispielsweise satellitenbasiertes, Mobilfunknetz.

Falls der Kunde den Totalbetrag der Zahlungstransaktion mittels seinem Mobilgerät 1 bezahlen möchte, schaltet er sein Mobilgerät 1 ein und wird in einer Ausführungsvariante sicherheitshalber von einem Authentifizierungsmodul 12 des Mobilgeräts 1, beispielsweise ein programmiertes Softwaremodul, aufgefordert, sich zu authentifizieren. Der Kunde wird beispielsweise aufgefordert, einen persönlichen Identifzierungscode einzugeben (Personal Identification Number, PIN), der vom Authentifizierungsmodul 12 entgegengenommen und mit einem im Mobilgerät 1, beispielsweise auf einer SIM-Karte 17 (Subscriber Identification Module) des Mobilgeräts 1, gesichert gespeicherten Code verglichen wird. In einer Variante verfügt das Authentifizierungsmodul 12 zudem über Hardwarekomponenten und weitere Softwarekomponenten, um vom Kunden ein biometrisches Merkmal zur Authentifizierung entgegenzunehmen und mit einem vorgängig im Mobilgerät 1, beispielsweise auf einer SIM-Karte 17 des Mobilgeräts 1, gesichert gespeicherten biometrischen Merkmal zu vergleichen. Das biometrische Merkmal ist beispielsweise ein Stimmmuster, das mittels einem Mikrofon des Mobilgeräts 1 aufgenommen wird, ein Fingerabdruck oder Gesichtszüge, die mit einem Videosensor des Mobilgeräts 1 erfasst werden, oder ein Augenmuster, z.B. ein Muster der Iris oder der Retina, das mit einem geeigneten Scanner aufgenommen wird.

Gegebenenfalls, nach einer erfolgreichen Authentifizierung, wählt der Kunde auf seinem Mobilgerät 1, beispielsweise mittels der Bedienungselemente 18 aus einem auf der Anzeige 19 des Mobilgeräts 1 dargestellten Funktionsmenü die Funktion "Zahlungstransaktion". Die Menü- und Funktionsablaufsteuerung wird beispielsweise durch ein programmiertes Softwaremodul des Mobilgeräts 1 ausgeführt, z.B. durch ein Java-Applet, das beispielsweise auf der SIM-Karte 17 des Mobilgeräts 1 gespeichert ist. Aus Sicherheitsgründen kann das (oder die) Softwaremodul(e) zur Ausführung der Funktion _{"}Zahlungstransaktion" beispielsweise von einem zuständigen Betreiber über das Mobilfunknetz 6 oder über eine kontaktlose Geräteschnittstelle 21-11 gesperrt werden, beispielsweise indem ein signiertes oder zertifiziertes Befehlswort mittels geeigneten Meldungen an das Mobilgerät 1 übermittelt wird, wo es durch ein entsprechendes Softwaremodul verarbeitet wird.

Nach der Wahl der Funktion für die Zahlungstransaktion wird der Benutzer vom Transaktionsantwortmodul 13 des Mobilgeräts 1, beispielsweise ein programmiertes Softwaremodul, aufgefordert, die Transaktionsidentifizierung der betreffenden Zahlungstransaktion anzugeben. Der Kunde kann die Transaktionsidentifizierung beispielsweise mittels Bedienungselementen 18 des Mobilgeräts 1 eintippen. Falls das Mobilgerät 1 über ein geeignetes Spracherkennungsmodul verfügt, kann der Kunde die Transaktionsidentifizierung dem Mobilgerät 1 auch mittels gesprochener Sprache angeben. Um Eingabefehler zu vermeiden, kann in einer Variante das Mobilgerät 1, beispielsweise mittels des Transaktionsantwortmoduls 13 des Mobilgeräts 1, die Transaktionsidentifizierung der betreffenden Zahlungstransaktionen vom betreffenden Bezahlungsterminal 2 über die kontaktlose Geräteschnittstelle 21-11 entgegennehmen, wie in der Figur 2 durch den gestrichelten Pfeil S1' angedeutet wird, und auf der Anzeige 19 des Mobilgeräts 1 darstellen, so dass der Kunde die Transaktionsidentifizierung der betreffenden Zahlungstransaktion dem Mobilgerät 1 dadurch angeben kann, dass er die angezeigte Transaktionsidentifizierung mittels der Bedienungselemente 18 des Mobilgeräts 1 akzeptiert.

In einer Minimalvariante dieser letzteren Ausführungsvariante ist das Bezahlungsterminal 2 mit mindestens einem Sender 21 der kontaktlosen Schnittstelle 21-11 ausgestattet. Der Sender 21 umfasst die nötigen Hardwareelemente zum Aussenden von Daten, beispielsweise in Form von Funk- oder Infrarotwellen, und für die Verbindung des Senders mit dem Prozessor 26 des Bezahlungsterminals 2, sowie die programmierten Softwaremodule und Softwareschnittstellen, die zum Betreiben und zum Steuern des Senders 21 benötigt werden. Für diese Minimalvariante ist das Mobilgerät 1 mit einem entsprechenden Empfänger 11 ausgerüstet, der über die nötigen Hardwareelemente und Softwaremodule verfügt, um Daten über die kontaktlose Schnittstelle 21-11 zu empfangen und an den Prozessor 16 des Mobilgeräts 1 weiterzuleiten (der Empfänger 11 kann beispielsweise auch der Mobilfunkempfänger des Mobilgeräts 1 sein). In dieser Minimalvariante kann das Bezahlungsterminal 2 die Transaktionsidentifizierung, beispielsweise während eines vordefinierten Zeitintervalls oder bis die Zahlungstransaktion für das Bezahlungsterminal 2 abgeschlossen ist, mehrfach, beispielsweise periodisch, aussenden, wobei die Sendeleistung des Senders 21 so gewählt wird, das die Transaktionsidentifizierung nur im engeren Bereich um das Bezahlungsterminal 2 empfangen werden kann und nicht unnötig von anderen Mobilgeräten 1 in der Dienststelle 5 empfangen wird.

Der Fachmann wird verstehen, dass das Bezahlungsterminal 2, respektive das Mobilgerät 1, auch jeweils mit Sendern und Empfängern für eine bidirektionale kontaktlose Schnittstelle ausgerüstet sein können, wobei beispielsweise auch diese bidirektionale kontaktlose Schnittstelle, zum Beispiel aus Kompatibilitätsgründen, im unidirektionalen Betrieb eingesetzt werden kann. Solche bidirektionale kontaktlose Geräteschnittstellen sind zum Beispiel Infrarotschnittstellen, zum Beispiel High Speed Infrared (HSIR)-Schnittstellen oder IrDA-Schnittstellen (Infrared Data Association), induktive Schnittstellen, zum Beispiel Radio Frequency Identification (RFID)-Schnittstellen, Home RF (Radio Frequency)-Schnittstellen, Digital European Cordless Telecommunications (DECT)-Schnittstellen oder andere Cordless Telecommunications System (CTS)-Schnittstellen, oder hochfrequente Funkschnittstellen, insbesondere sogenannte Bluetooth-Schnittstellen, die z.B. bei 2.4GHz arbeiten und zum Anmeldezeitpunkt der vorliegenden Erfindung beispielsweise im Internet auf der Seite "www.bluetooth.com" beschrieben wurden.

Das Transaktionsantwortmodul 13 des Mobilgeräts 1 übermittelt die vom Kunden angegebene Transaktionsidentifizierung über das Mobilfunknetz 6 an die Transaktionszentrale 4, wie in der Figur 2 durch den Pfeil S2 angedeutet wird. Die Transaktionszentrate 4 basiert beispielsweise auf einem herkömmlichen Kommunikations-Server, das heisst auf einem Computer, der als Server mit geeigneten Operations- und Datenbanksystemen, Datenspeichern und einem Kommunikationsmodul 45 ausgelegt ist Die Transaktionszentrale 4 kann auch mit mehreren untereinander verbundenen Computem realisiert werden. An dieser Stelle soll darauf aufmerksam gemacht werden, dass der Anschluss der Transaktionszentrale 4 an das Mobilfunknetz 6 in der Figur 1 nur schematisch dargestellt ist und dass dieser Anschluss in bekannter Weise, zum Beispiel über eine Festnetzverbindung und über eine Vermittlungsstelle, insbesondere ein Mobile Switching Centre (MSC), erfolgt. Die Mobilgeräte 1 können beispielsweise auch mittels WAP (Wireless Application Protocol), geeigneten Java Applets (Java ist ein eingetragenes Warenzeichen von Sun Microsystems) und/oder SIM-Toolkit-Funktionen über das Internet mit der Transaktionszentrale 4 kommunizieren.

In der Transaktionszentrale 4 werden die vom Bezahlungsterminal 2 übermittelte Transaktionsidentifizierung und der zugeordnete Transaktionstotalbetrag, wie in der Figur 2 durch den Pfeil S1 angedeutet, mittels des Kommunikationsmoduls 45 entgegengenommen und zwischengespeichert. Das Kommunikationsmodul 45 umfasst beispielsweise ein Softwaremodul sowie die nötigen Hardwarekomponenten, um über das Mobilfunknetz 6 sowie über das Kommunikationsnetz 3 zu kommunizieren, das heisst, insbesondere um über diese Netze Daten mit den Mobilgeräten 1 und den Bezahlungsterminals 2 auszutauschen. In der Transaktionszentrale 4 wird auch die vom Mobilgerät 1 übermittelte Transaktionsidentifizierung, wie in der Figur 2 durch den Pfeil S2 angedeutet, mittels des Kommunikationsmoduls 45 entgegengenommen. Dabei ermittelt das Kommunikationsmodul 45 zudem in bekannter Weise die Rufnummer, beispielsweise die MSISDN-Nummer (Mobile Subscriber ISDN), des Mobilgeräts 1, das die Transaktionsidentifizierung übermittelt hat, und speichert diese Rufnummer in der Transaktionszentrale 4 der vom Mobilgerät 1 entgegengenommenen Transaktionsidentifizierung zugeordnet ab.

Wie in der Figur 2 illustriert wird, erwartet die Transaktionszentrale 4 für eine betreffende Zahlungstransaktion vom Mobilgerät 1 die durch den Pfeil S2 angedeutete Übertragung der Transaktionsidentifizierung innerhalb eines vordefinierten Zeitintervalls Δt₁ nachdem die Transaktionszentrale 4 vom Bezahlungsterminal 2 die durch den Pfeil S1 angedeutete Übertragung des Transaktionstotalbetrags und der Transaktionsidentifizierung erhalten hat. Ansonsten wird in der Transaktionszentrale 4 ein Zeitfehler registriert und die Weiterbehandlung der Zahlungstransaktion, beispielsweise nach entsprechender Benachrichtigung des Bezahlungsterminals 2, abgebrochen. Wie bereits im Zusammenhang mit dem Transaktionsaufgabemodul 23 erwähnt wurde, kann die in der Figur 2 illustrierte zeitliche Abfolge der Pfeile S1 und S2 auch umgekehrt ausgeführt werden, indem nämlich das Bezahlungsterminal 2 die durch den Pfeil S1 angedeutete Übermittlung der Transaktionsidentifizierung und des Transaktionstotalbetrags an die Transaktionszentrale 4 erst dann ausführt, wenn es von der Transaktionszentrale 4 dazu aufgefordert wird, wobei die Transaktionszentrale 4 eine solche Aufforderung auf Grund der gemäss Pfeil S2 vom Mobilgerät 1 an die Transaktionszentrale 4 übertragenen Transaktionsidentifizierung, welche insbesondere die Bezahlungsterminalidentifizierung enthält, initiieren kann (das vordefinierte Zeitintervall Δt₁ wird entsprechend durch den Pfeil S2 gestartet).

Die Transaktionszentrale 4 umfasst ein Bezahlungsaufforderungsmodul 42, beispielsweise ein programmiertes Softwaremodul, welches die vom Mobilgerät 1 entgegengenommene Transaktionsidentifizierung mit zwischengespeicherten Transaktionsidentifizierungen vergleicht, die von Bezahlungsterminals 2 entgegengenommen wurden. Bei einer Übereinstimmung bereitet das Bezahlungsaufforderungsmodul 42 eine Bezahlungsaufforderung vor, welche mindestens die übereinstimmende Transaktionsidentifizierung sowie den dieser Transaktionsidentifizierung zugeordeneten Transaktionstotalbetrag umfasst. Wie in der Figur 2 durch den Pfeil S3 angedeutet wird, wird die vorbereitete Bezahlungsaufforderung vom Bezahlungsaufforderungsmodul 42 der Transaktionszentrale 4, unter Zuhilfenahme des Kommunikationsmoduls 45, über das Mobilfunknetz 6 an das Mobilgerät 1 mit der ermittelten Rufnummer übermittelt. Andernfalls, wenn das Bezahlungsaufforderungsmodul 42 keine übereinstimmenden Transaktionsidentifizierungen bestimmen kann, wird von der Transaktionszentrale 4 eine entsprechende Fehlermeldung, beispielsweise mit der Aufforderung die Transaktionsidentifizierung erneut einzugeben, an das Mobilgerät 1 übermittelt. An dieser Stelle sollte erwähnt werden, dass die Bezahlungsaufforderung zur Erhöhung der Sicherheit, insbesondere zur Bestimmung der Authentizität der Transaktionszentrale 4, durch das Bezahlungsaufforderungsmodul 42 mit einer elektronischen Signatur der Transaktionszentrale 4 versehen oder als gesichertes Zertifikat ausgeführt wird.

Im betreffenden Mobilgerät 1 wird die von der Transaktionszentrale 4 übermittelte Bezahlungsaufforderung über das Mobilfunknetz 6 entgegengenommen und in einer Variante auf Grund der darin enthaltenen Transaktionsidentifizierung gefiltert, indem die in der Bezahlungsaufforderung enthaltene Transaktionsidentifizierung vom Mobilgerät 1 mit der vorgängig an die Transaktionszentrale 4 übermittelten Transaktionsidentifizierung verglichen wird. In einem Bezahlungsbelegmodul 14 des Mobilgeräts 1, beispielsweise ein programmiertes Softwaremodul, wird auf Grund der empfangenen Bezahlungsaufforderung ein Bezahlungsbeleg vorbereitet, beispielsweise nachdem die Authentizität der Bezahlungsaufforderung, respektive die Authentizität der Transaktionszentrale 4 überprüft wurde und die Bezahlungsaufforderung dem Kunden auf der Anzeige 19 des Mobilgeräts 1 angezeigt wurde und der Kunde die Bezahlung mittels den Bedienungselementen 18 des Mobilgeräts 1 akzeptiert und damit freigegeben hat. Der vorbereitete Bezahlungsbeleg umfasst die entgegengenommene Bezahlungsaufforderung und eine Kundenidentifizierung des Kunden, beispielsweise eine IMSI (International Mobile Subscriber Identity) oder eine speziell für diese, hier beschriebene Zahlungsart zugeteilte Benutzemummer, die jeweils auf der SIM-Karte 17 des Mobilgeräts 1 gespeichert sind. Zur Verbesserung der Sicherheit kann der Bezahlungsbeleg durch das Bezahlungsbelegmodul 14 mit einer elektronischen Signatur des betreffenden Kunden versehen oder als gesichertes Zertifikat ausgeführt werden. Der Bezahlungsbeleg kann auch mit einer Zeit-/Datumsangabe versehen werden.

Vorteilhafterweise fügt das Bezahlungsbelegmodul 14 zudem Angaben über die gewünschte Zahlungsart in den Bezahlungsbeleg ein, welche Angaben beispielsweise als Default-Wert in der SIM-Karte 17 des Mobilgeräts 1 gespeichert sind oder vom betreffenden Kunden über die Anzeige 19 des Mobilgeräts 1 angefordert und über die Bedienungselemente 18 entgegengenommen werden. Die Angaben über die gewünschte Zahlungsart spezifizieren beispielsweise eine gewünschte Belastung des zu zahlenden Transaktionstotalbetrags auf eine bestimmte Kreditkartennummer, eine Belastung auf ein bestimmtes Kundenkonto, eine Belastung auf ein bestimmtes Bankkonto oder eine Belastung auf einen im Mobilgerät gespeicherten vorausbezahlten Geldbetrag, beispielsweise auf der SIM-Karte 17 des Mobilgeräts 1. Das Bezahlungsbelegmodul 14 des Mobilgeräts 1 übermittelt den vorbereiteten Bezahlungsbeleg, wie in der Figur 2 durch den Pfeil S4 angedeutet, über das Mobilfunknetz 6 an die Transaktionszentrale 4.

Wie in der Figur 2 illustriert wird, erwartet die Transaktionszentrale 4 für eine betreffende Zahlungstransaktion vom Mobilgerät 1 die durch den Pfeil S4 angedeutete Übertragung des Bezahlungsbelegs innerhalb eines vordefinierten Zeitintervalls Δt₂ nachdem die Transaktionszentrale 4 die durch den Pfeil S3 angedeutete Übertragung der Bezahlungsaufforderung an das Mobilgerät 1 ausgeführt hat. Ansonsten wird in der Transaktionszentrale 4 ein Zeitfehler registriert und die durch den Pfeil S3 angedeutete Übertragung beispielsweise erneut ausgeführt und eventuell, beispielsweise bei wiederholtem Misserfolg, die Weiterbehandlung der Zahlungstransaktion, beispielsweise nach entsprechender Benachrichtung des Bezahlungsterminals 2, abgebrochen.

In der Transaktionszentrale 4 wird der Bezahlungsbeleg, beispielsweise vom Bezahlungsaufforderungsmodul 42, entgegengenommen und gegebenenfalls die Authentizität des Kunden auf Grund der elektronischen Signatur, respektive des Zertifikats, überprüft. In einer Ausführungsvariante überprüft die Transaktionszentrale 4, zum Beispiel mittels des Solvenzüberprüfungsmoduls 43, das beispielsweise als programmiertes Softwaremodul ausgeführt ist, auf Grund der im Bezahlungsbeleg übermittelten Kundenidentifizierung die Solvenz des durch die Kundenidentifizierung bestimmten Kunden. Dabei greift das Solvenzüberprüfungsmodul 43 beispielsweise direkt oder über geeignete Dienste auf eine entsprechende Datenbank zu, deren Inhalt beispielsweise durch einen Kommunikationsnetzbetreiber, beispielsweise der Betreiber des Mobilfunknetzes 6, oder durch ein Finanzinstitut verwaltet wird. Bei einem negativen Resultat der Solvenzprüfung, respektive der Authentizitätsprüfung, kann die Transaktionszentrale 4, beispielsweise durch das Transaktionsbestätigungsmodul 44, das beispielsweise als programmiertes Softwaremodul ausgeführt ist, gegebenenfalls eine negative Transaktionsbestätigung an das betreffende Mobilgerät 1 sowie an das an der betreffenden Zahlungstransaktion beteiligte Bezahlungsterminal 2 übermitteln, mittels welcher negativen Transaktionsbestätigung dem betreffenden Kunden die Bezahlung der Zahlungstransaktion über das erfindungsgemässe Verfahren wegen mangelnder Solvenz verwehrt wird. Bei einem positiven Resultat der Solvenzprüfung und/oder der Authentizitätsprüfung übermittelt das Transaktionsbestätigungsmodul 44 der Transaktionszentrale 4, eine positive Transaktionsbestätigung an das an der betreffenden Zahlungstransaktion beteiligte Bezahlungsterminal 2 und an das betreffende Mobilgerät 1. Die Transaktionsbestätigungen enthalten mindestens die Transaktionsidentifizierung der betreffenden Zahlungstransaktion sowie eine Angabe darüber, ob es sich um eine positive oder negative Transaktionsbestätigung handelt, wobei im letzteren Fall die jeweiligen Gründe, beispielsweise ein oben erwähnter Zeitfehler, mangelnde Solvenz oder nicht bestätigte Authentizität des betreffenden Kunden, angegeben werden. Bei einer positiven Transaktionsbestätigung gilt die Zahlungstransaktion für das Bezahlungsterminal 2 und für das Mobilgerät 1, respektive den betreffenden Kunden als erfolgt und die erstandenen Produkte und/oder Dienstleistungen können dem Kunden in der Dienststelle 5 freigegeben werden. Der Fachmann wird verstehen, dass die positive Transaktionsbestätigung beispielsweise erst dann von der Transaktionszentrale 4 an die an der betreffenden Zahlungstransaktion beteiligten Transaktionspartner übermittelt wird, wenn die untenstehend beschriebene Weiterverarbeitung des Bezahlungsbelegs durch die Transaktionszentrale 4 abgeschlossen ist. Die Übermittlung der Transaktionsbestätigung durch die Transaktionszentrale 4 an das Bezahlungsterminal 2 wird in der Figur 2 durch den Pfeil S5 und die Übermittlung der Transaktionsbestätigung durch die Transaktionszentrale 4 an das Mobilgerät 1 wird in der Figur 2 durch den Pfeil S6 angedeutet. Insbesondere positive Transaktionsbestätigungen können von der Transaktionszentrale 4 auch mittels E-Mail, per Fax oder per Briefpost an eine vordefinierte E-Mail-Adresse, Fax-Nummer, respektive Postadresse des betreffenden Kunden und/oder (des Betreibers) der Dienststelle 5 übermittelt werden.

Vorteilhafterweise werden die Bezahlungsbelege und/oder die positiven Transaktionsbestätigungen, beispielsweise durch das Bezahlungsbelegmodul 14, in einem Speicher 15 des Mobilgeräts 1 gespeichert, beispielsweise auf einer SIM-Karte 17 des Mobilgeräts 1, so dass sie später als Quittung verwendet werden können und/oder dass sie dem betreffenden Kunden zur Verwaltung der von ihm getätigten Zahlungstransaktionen zur Verfügung stehen. Falls Transaktionsbestätigungen durch die Dienststelle 5, respektive deren Betreiber, und den Kunden, beispielsweise im Mobilgerät 1, zu Buchführungszwecken, respektive zu Quittierungszwecken, verwendet werden, enthalten sie zusätzlich mindestens den Transaktionstotalbetrag der betreffenden Zahlungstransaktion, vorteilhafterweise aber zusätzlich auch weitere oben erwähnte Angaben, die im Bezahlungsbeleg der betreffenden Zahlungstransaktion enthalten sind, insbesondere Signaturen, respektive Zertifikate, der beteiligten Transaktionspartner.

Bei gegebenenfalls positivem Resultat der Solvenzprüfung und/oder der Authentizitätsprüfung wird der Bezahlungsbeleg in der Transaktionszentrale 4, gegebenenfalls unter Berücksichtigung der darin enthaltenen Angaben über die vom Kunden gewünschte Zahlungsart, weiterverarbeitet. Mittels des Kommunikationsmoduls 45 können die Bezahlungsbelege beispielsweise über das Kommunikationsnetz 3 an ein Finanzinstitut oder an eine Clearingstelle weitergeleitet werden, oder der Transaktionstotalbetrag kann durch die Transaktionszentrale 4 über das Mobilnetz 6 direkt von einem im Mobilgerät 1, beispielsweise in der SIM-Karte 17 des Mobilgeräts 1, gespeicherten vorausbezahlten Geldbetrag abgezogen werden. Auf Grund einer in der Transaktionsidentifizierung enthaltenen Dienststellenidentifizierung kann der Transaktionstotalbetrag von der Transaktionszentrale 4, beispielsweise durch das Gutschriftmodul 41 der Transaktionszentrale 4, welches beispielsweise als Softwaremodul ausgeführt ist, der Dienststelle 5 gutgeschrieben werden, wobei diese Gutschrift beispielsweise auf einem entsprechenden Konto in der Transaktionszentrale 4 oder über das Kommunikationsnetz 3 erreichbar in einer Datenbank eines Finanzinstituts gutgeschrieben wird. Die Gutschrift kann aber auch auf dem oben beschriebenen Weg über das Finanzinstitut oder die Clearingstelle abgewickelt werden.

Wie bereits im Zusammenhang mit der Menü- und Funktionsablaufsteuerung für das Anwählen der Funktion "Zahlungstransaktion" erwähnt wurde, können die Softwaremodule, insbesondere das Transaktionsantwortmodul 13 und das Bezahlungsbelegmodul 14 sowie Softwarekomponenten des Authentifizierungsmoduls 12, beispielsweise auf der SIM-Karte 17 des Mobilgeräts gespeichert werden, zum Beispiel als Java-Applet oder als SIM-Toolkit Funktionen, und beispielsweise auch auf einem Prozessor der SIM-Karte 17 ausgeführt werden. Die Softwaremodule können zudem so realisiert werden, dass sie von einem berechtigten Betreiber über die kontaktlose Geräteschnittstelle 11 oder über das Mobilfunknetz 6 gesperrt werden können, beispielsweise wenn der Eigentümer des Mobilgeräts 1 den Verlust des betreffenden Mobilgeräts 1 einem zuständigen Betreiber gemeldet hat.

Als abschliessender Punkt soll zudem angeführt werden, dass die Datenübertragungen über die kontaktlose Schnittstelle 21-11 zur Erhöhung der Sicherheit gemäss einem dem Fachmann bekannten Verfahren verschlüsselt werden können.

Das erfindungsgemässe Zahlungstransaktionsverfahren und das erfindungsgemässe Zahlungstransaktionssystem ermöglichen Kunden, die mit einem Mobilgerät 1 ausgerüstet sind, in einer Dienststelle 5, welche mit einem oder mehreren Bezahlungsterminals 2 ausgestattet sind, Zahlungstransaktionen bargeldlos mit ihren Mobilgeräten 1 auszuführen. Dabei muss ein Kunde, nachdem er sich beispielsweise bei seinem Mobilgerät 1 authentifiziert hat, je nach Ausführung des Mobilgeräts 1, bloss die Transaktionsidentifizierung der betreffenden Zahlungstransaktion, beispielsweise wenn das Mobilgerät 1 über keine kontaktlose Geräteschnittstelle verfügt, oder gar keine weiteren Daten in das Möbilgerät 1 eintippen, wenn die Bezahlungsterminals 2 die Transaktionsidentifizierung über eine kontaktlose Geräteschnittstelle 21-11 direkt an das Mobilgerät 1 übertragen können. Solche Zahlungstransaktionen von einer oder mehreren Dienststellen 5 können in einer Transaktionszentrale 4 abgewickelt werden, wobei die Transaktionszentrale 4 die Authentizität beteiligter Zahlungstransaktionspartner und die Solvenz von Kunden überprüfen, sowie Belastungen, gemäss Angaben der Kunden, und Gutschriften für Zahlungstransaktionen ausführen kann.

## Patentansprüche

1. Zahlungstransaktionsverfahren zwischen einem Kunden mit einem tragbaren Mobilgerät (1) und einer Dienststelle (5), in welchem Zahlungstransaktionsverfahren ein Bezahlungsterminal (2) der Dienststelle (5) einen zu bezahlenden Transaktionstotalbetrag und eine diesem Transaktionstotalbetrag zugeordnete Transaktionsidentifizierung bestimmt und den Kunden über den Transaktionstotalbetrag und die Transaktionsidentifizierung informiert, und in welchem Zahlungstransaktionsverfahren der Kunde die Transaktionsidentifizierung dem Mobilgerät (1) angibt, wobei
das Bezahlungsterminal (2) den Transaktionstotalbetrag und die Transaktionsidentifizierung über ein Kommunikationsnetz (3) an eine Transaktionszentrale (4) übermittelt, dadurch gehennzeichnet,
dass das Mobilgerät (1) die vom Kunden angegebene Transaktionsidentifizierung über ein Mobilfunknetz (6) an die Transaktionszentrale (4) übermittelt,
dass die Transaktionszentrale (4) eine Bezahlungsaufforderung, die mindestens den Transaktionstotalbetrag umfasst, über das Mobilfunknetz (6) an das Mobilgerät (1) übermittelt, von welchem Mobilgerät (1) die Transaktionsidentifizierung übermittelt wurde.

2. Zahlungstransaktionsverfahren gemäss Anspruch 1, **dadurch gekennzeichnet, dass** im Mobilgerät (1) ein Bezahlungsbeleg, der eine Verknüpfung der Bezahlungsaufforderung mit einer Kundenidentifizierung des Kunden umfasst, vorbereitet und vom Mobilgerät (1) über das Mobilfunknetz (6) an die Transaktionszentrale (4) übermittelt wird.

3. Zahlungstransaktionsverfahren gemäss einem der Ansprüche 1 oder 2, **dadurch gekennzeichnet, dass** das Bezahlungsterminal (2) bei der Bestimmung der Transaktionsidentifizierung eine Bezahlungsterminalidentifizierung in die Transaktionsidentifizierung einfügt, welche Bezahlungsterminalidentifizierung ermöglicht, das betreffende Bezahlungsterminal (2) aus mehreren in der Dienststelle (5) vorhandenen Bezahlungsterminals (2) zu identifizieren.

4. Zahlungstransaktionsverfahren gemäss einem der Ansprüche 1 bis 3, **dadurch gekennzeichnet, dass** das Bezahlungsterminal (2) bei der Bestimmung der Transaktionsidentifizierung eine Dienststellenidentifizierung in die Transaktionsidentifizierung einfügt, und dass der Transaktionstotalbetrag der durch die Dienststellenidentifizierung bestimmten Dienststelle (5) gutgeschrieben wird.

5. Zahlungstransaktionsverfahren gemäss einem der Ansprüche 1 bis 4, **dadurch gekennzeichnet, dass** im Mobilgerät (1) vor der Übermittlung des Bezahlungsbelegs an die Transaktionszentrale (4) Angaben über die Bezahlungsart in den Bezahlungsbeleg eingefügt werden.

6. Zahlungstransaktionsverfahren gemäss einem der Ansprüche 1 bis 5, **dadurch gekennzeichnet, dass** das Bezahlungsterminal (2) die Transaktionsidentifizierung über eine kontaktlose Geräteschnittstelle (21-11) direkt an das Mobilgerät (1) übermittelt, und dass der Kunde die Transaktionsidentifizierung dem Mobilgerät (1) angibt, indem er die vom Bezahlungsterminal (2) über die kontaktlose Geräteschnittstelle (21-11) empfangene Transaktionsidentifizierung mittels Bedienungselementen (18) des Mobilgeräts (1) akzeptiert.

7. Zahlungstransaktionsverfahren gemäss einem der Ansprüche 1 bis 6, **dadurch gekennzeichnet, dass** sich der Kunde vor der Angabe der Transaktionsidentifizierung bei seinem Mobilgerät (1) mit einem biometrischen Merkmal authentifiziert.

8. Zahlungstransaktionsverfahren gemäss einem der Ansprüche 1 bis 7, **dadurch gekennzeichnet, dass** die Solvenz des Kunden in der Transaktionszentrale (4) überprüft wird.

9. Zahlungstransaktionssystem umfassend eines oder mehrere tragbare Mobilgeräte (1) und ein oder mehrere Bezahlungsterminals (2) in mindestens einer Dienststelle (5), sowie eine Transaktionszentrale (4), welche Mobilgeräte (1) und Bezahlungsterminals (2) jeweils mindestens einen Prozessor (16, 26) umfassen, welche Bezahlungsterminals (2) jeweils Mittel (29) umfassen, um einen Kunden über einen zu bezahlenden Transaktionstotalbetrag einer Zahlungstransaktion und eine dieser Zahlungstransaktion zugeordnete Transaktionsidentifizierung zu informieren,wobei
die Bezahlungsterminals (2) jeweils ein Transaktionsaufgabemodul (23) umfassen, welches Transaktionsaufgabemodul (23) jeweils die Transaktionsidentifizierung und den Transaktionstotalbetrag der betreffenden Zahlungstransaktion über ein Kommunikationsnetz (3) an die Transaktionszentrale (4) übermittelt, **dadurch gekennzeichnet,**
**dass** die Mobilgeräte (1) jeweils ein Transaktionsantwortmodul (13) umfassen, welches Transaktionsantwortmodul (13) eine von einem Kunden mittels Bedienungselementen (18) des betreffenden Mobilgeräts (1) angegebene Transaktionsidentifizierung einer betreffenden Zahlungstransaktion entgegennimmt und über ein Mobilfunknetz (6) an die Transaktionszentrale (4) übermittelt, und
**dass** die Transaktionszentrale (4) ein Bezahlungsaufforderungsmodul (42) umfasst, welches Bezahlungsaufforderungsmodul (42) eine Bezahlungsaufforderung, die mindestens den Transaktionstotalbetrag der betreffenden Zahlungstransaktion umfasst, über das Mobilfunknetz (6) an das Mobilgerät (1) übermittelt, von welchem Mobilgerät (1) die Transaktionsidentifizierung der betreffenden Zahlungstransaktion übermittelt wurde.

10. System gemäss Anspruch 9, **dadurch gekennzeichnet, dass** die Mobilgeräte (1) ein Bezahlungsbelegmodul (14) umfassen, welches Bezahlungsbelegmodul (14) einen Bezahlungsbeleg, der eine Verknüpfung einer empfangenen Bezahlungsaufforderung mit einer Kundenidentifizierung des Kunden umfasst, vorbereitet und über das Mobilfunknetz (6) an die Transaktionszentrale (4) übermittelt.

11. System gemäss einem der Ansprüche 9 oder 10, **dadurch gekennzeichnet, dass** die Bezahlungsterminals (2) jeweils ein Transaktionsidentifizierungsmodul (22) umfassen, welches Transaktionsidentifizierungsmodul (22) jeweils die Transaktionsidentifizierung für eine Zahlungstransaktion bestimmt und jeweils eine Bezahlungsterminalidentifizierung des betreffenden Bezahlungsterminals (2) in die Transaktionsidentifizierung einfügt.

12. System gemäss einem der Ansprüche 9 bis 11, **dadurch gekennzeichnet, dass** die Bezahlungsterminals (2) jeweils ein Transaktionsidentifizierungsmodul (22) umfassen, welches Transaktionsidentifizierungsmodul (22) jeweils die Transaktionsidentifizierung für eine Zahlungstransaktion bestimmt und jeweils eine Dienststellenidentifizierung in die Transaktionsidentifizierung einfügt, und dass die Transaktionszentrale (4) ein Gutschriftmodul (41) umfasst, welches Gutschriftmodul den Transaktionstotalbetrag der betreffenden Zahlungstransaktion der durch die Dienststellenidentifizierung bestimmten Dienststelle (5) gutschreibt.

13. System gemäss einem der Ansprüche 10 bis 12, **dadurch gekennzeichnet, dass** das Bezahlungsbelegmodul (14) Mittel umfasst, um vor der Übermittlung des Bezahlungsbelegs an die Transaktionszentrale (4) Angaben über die Bezahlungsart in den Bezahlungsbeleg einzufügen.

14. System gemäss einem der Ansprüche 9 bis 13, **dadurch gekennzeichnet, dass** die Bezahlungsterminals (2) jeweils mindestens einen Sender (21) einer kontaktlosen Geräteschnittstelle (21-11) und die Mobilgeräte (1) jeweils mindestens einen Empfänger (21) der kontaktlosen Geräteschnittstelle (21-11) umfassen, über welche kontaktlose Geräteschnittstelle (21-11) die Transaktionsidentifizierung der betreffenden Zahlungstransaktion vom betreffenden Bezahtungsterminal (2) direkt an das betreffende Mobilgerät (1) übertragen wird, und dass das Transaktionsantwortmodul (13) Mittel umfasst, um einen vom betreffenden Kunden mittels Bedienungselementen (18) des betreffenden Mobilgeräts (1) eingegebenen Akzeptierungsbefehl entegegenzunehmen, und dem Akzeptierungsbefehl entsprechend die Transaktionsidentifizierung der betreffenden Zahlungstransaktion entgegenzunehmen.

15. System gemäss einem der Ansprüche 9 bis 14, **dadurch gekennzeichnet, dass** die Mobilgeräte (1) jeweils ein Authentifizierungsmodul (12) umfassen, um von einem Kunden mindestens ein biometrisches Merkmal entgegenzunehmen und um den Kunden auf Grund des entgegengenommenen biometrischen Merkmals zu authentifizieren.

16. System gemäss einem der Ansprüche 9 bis 15, **dadurch gekennzeichnet, dass** die Transaktionszentrale (4) ein Solvenzüberprüfungsmodul (43) umfasst, welches Solvenzüberprüfungsmodul (43) die Solvenz eines Kunden überprüft.

## Revendications

1. Procédé de transaction de paiement entre un client muni d'un périphérique mobile portable (1) et un centre de services (5), procédé de transaction de paiement dans lequel un terminal de paiement (2) du centre de services (5) détermine un montant transactionnel total à payer et une identification de transaction associée à ce montant transactionnel total, et informe le client sur le montant transactionnel total ainsi que sur l'identification de transaction et dans lequel le client indique l'identification de transaction au périphérique mobile (1),
le terminal de paiement (2) transmettant le montant transactionnel total et l'identification de transaction par un réseau de communication (3) à une centrale de transaction (4), **caractérisé en ce que**
le périphérique mobile (1) transmet l'identification de transaction indiquée par le client à la centrale de transaction (4) par un réseau mobile de radiocommunication (6),
**en ce que** la centrale de transaction (4) comprend une invite de paiement qui comprend au moins le montant transactionnel total, le transmet au périphérique mobile (1) par le réseau mobile de radiocommunication (6), périphérique mobile (1) depuis lequel l'identification a été transmise.

2. Procédé de transaction de paiement selon la revendication 1, **caractérisé en ce que** dans l'appareil mobile (1), un récépissé d'identification de transaction est préparé lequel comprend un lien avec l'identification du client, et est transmis depuis le périphérique mobile (1) à la centrale de transaction (4) par l'intermédiaire du réseau mobile de radiocommunication (6).

3. Procédé de transaction de paiement selon l'une des revendications 1 ou 2, **caractérisé en ce que** le terminal de paiement (2) insère dans l'identification de transaction lors de la détermination de l'identification de transaction une identification de terminal de paiement, identification de terminal de paiement qui permet d'identifier le terminal de paiement considéré (2) parmi plusieurs terminaux de paiement (2) se trouvant dans le centre de services (5).

4. Procédé de transaction de paiement selon l'une des revendications 1 à 3, **caractérisé en ce que** le terminal de paiement (2) insère dans l'identification de transaction lors de la détermination de l'identification de transaction une identification de centre de services et **en ce que** le montant transactionnel total est crédité au centre de services (5) défini par l'identification de centre de services.

5. Procédé de transaction de paiement selon l'une des revendications 1 à 4, **caractérisé en ce que** dans le périphérique mobile (1) avant le transfert du récépissé de paiement à la centrale de transaction (4), des données sur le mode de paiement sont insérées dans le récépissé de paiement.

6. Procédé de transaction de paiement selon l'une des revendications 1 à 5, **caractérisé en ce que** le terminal de paiement (2) transfert directement au périphérique mobile (1) l'identification de transaction par une interface sans fil de périphérique (21-11), et **en ce que** le client indique l'identification de transaction au périphérique mobile (1) dans le fait qu'il accepte l'identification de transaction reçue du terminal de paiement (2) par le biais de l'interface sans fil de périphérique (21-11), au moyen des élément de commande (18) du périphérique mobile (1).

7. Procédé de transaction de paiement selon l'une des revendications 1 à 6, **caractérisé en ce que** le client s'authentifie avant l'entrée de l'identification de transaction auprès de son périphérique mobile (1) par une caractéristique biométrique.

8. Procédé de transaction de paiement selon l'une des revendications 1 à 7, **caractérisé en ce que** la solvabilité du client est vérifiée dans la centrale de transaction (4).

9. Système de transaction de paiement comprenant un ou plusieurs périphériques mobiles (1) et un ou plusieurs terminaux de paiement (2) dans au moins un centre de services (5) ainsi qu'une centrale de transaction (4), périphériques mobiles (1) et terminaux de paiement (2) qui comprennent au moins un processeur (16, 26), terminaux de paiement (2) qui comprennent respectivement des moyens (29) pour informer un client sur le montant total transactionnel à payer d'une transaction de paiement
les terminaux de paiement (2) comprenant respectivement un module d'ordre de transaction (23), module d'ordre de transaction (23) qui transmet respectivement l'identification de transaction et le montant transactionnel total de la transaction de paiement considérée par l'intermédiaire d'un réseau de communication (3) à la centrale de transaction (4), **caractérisé en ce que**
les périphériques mobiles (1) comprennent respectivement un module de réponse transactionnelle (13), module de réponse transactionnelle (13) qui reçoit une identification d'une transaction de paiement considérée, indiquée par le client au moyen d'éléments de commande (18) du périphérique mobile concerné (1) et la transmet par un réseau mobile de radiocommunication (6) à la centrale de transaction (4), et
**en ce que** la centrale de transaction (4) comprend un module d'invite de paiement (42), module d'invite de paiement (42) qui transmet par l'intermédiaire du réseau radio mobile (6) une invite de paiement qui comprend au moins le montant transactionnel total de la transaction de paiement considérée, au périphérique mobile (1), périphérique mobile (1) depuis lequel a été transmis l'identification de la transaction de paiement concernée.

10. Système selon la revendication 9, **caractérisé en ce que** les périphériques mobiles (1) comprennent respectivement un module de justificatif de paiement (14), module de justificatif de paiement (14) qui prépare un justificatif de paiement qui comprend un lien entre une invite de paiement reçue et une identification du client et qui le transmet par le réseau radio mobile (6) à la centrale de transaction (4).

11. Système selon l'une des revendications 9 ou 10, **caractérisé en ce que** les terminaux de paiement (2) comprennent respectivement un module d'identification de paiement (22), module d'identification de paiement (22).qui définit respectivement l'identification pour une transaction de paiement et insère une identification du terminal de paiement (2) dans l'indentification de transaction.

12. Système selon l'une des revendications 9 à 11, **caractérisé en ce que** les terminaux de paiement (2) comprennent respectivement un module d'identification de transaction (22), module d'identification de transaction (22) qui définit respectivement l'identification pour une transaction de paiement et insère respectivement une identification de centre de services dans l'identification de transaction et **en ce que** la centrale de transaction (4) comprend un module de crédit (41), module de crédit qui crédite le montant transactionnel total de la transaction de paiement concernée au centre de services (5) défini par l'identification de centre de services.

13. Système selon l'une des revendications 10 à 12, **caractérisé en ce que** le module de récépissé de paiement (14) comprend des moyens pour insérer avant le transfert du récépissé de paiement à la centrale de transaction (4), des données sur le mode de paiement dans le récépissé de paiement.

14. Système selon l'une des revendications 9 à 13, **caractérisé en ce que** les terminaux de paiement (2) comprennent respectivement au moins un émetteur (21) d'une interface sans contact de périphérique ((21, 11) et les périphériques mobiles (1) respectivement au moins un récepteur (21) de l'interface sans contact de périphérique (21, 11), interface sans contact de périphérique (21, 11) par l'intermédiaire de laquelle l'identification de la transaction de paiement considérée est transmise par le terminal de paiement considéré (2) directement au périphérique mobile concerné (1), et **en ce que** le module de réponse transactionnel (13) comprend des moyens pour réceptionner une instruction d'acceptation saisie par le client concerné au moyen des éléments de commande (18) du périphérique mobile considéré (1) et recevoir en fonction de l'instruction d'acceptation, l'identification de la transaction de paiement considérée.

15. Système selon l'une des revendications 9 à 15, **caractérisé en ce que** les périphériques mobiles (1) comprennent respectivement un module d'authentification (12) pour réceptionner au moins une caractéristique biométrique du client et authentifier le client sur la base de la caractéristique biométrique reçue.

16. Système selon l'une des revendications 9 à 14, **caractérisé en ce que** la centrale de transaction (4) comprend un module de contrôle de solvabilité (43), module de contrôle de solvabilité (43) qui contrôle la solvabilité d'un client.

## Claims

1. Payment transaction method between a customer with a portable mobile device (1) and a service point (5) in which payment transaction method a payment terminal (2) of the service point (5) determines a total transaction amount to be paid and a transaction identification assigned to this total transaction amount and informs the customer about the total transaction amount and the transaction identification, and in which payment transaction method the customer indicates the transaction identification to the mobile device (1),
the payment terminal (2) transmitting the total transaction amount and the transaction identification via a communication network (3) to a central transaction unit (4), **characterised in that**
the mobile device (1) transmits the transaction identification indicated by the customer via a mobile radio network (6) to the central transaction unit (4),
the central transaction unit (4) transmits a payment request comprising at least the total transaction amount via the mobile radio network (6) to the mobile device (1) from which the transaction identification was transmitted.

2. Payment transaction method according to claim 1, **characterised in that** a payment record is prepared comprising a linking of the payment request to a customer identification for the customer and is transmitted from the mobile device (1) via the mobile radio network (6) to the central transaction unit (4).

3. Payment transaction method according to one of the claims 1 or 2, **characterised in that**, when determining the transaction identification, the payment terminal (2) inserts a payment terminal identification into the transaction identification, which payment terminal identification makes it possible to identify the respective payment terminal (2) from among a plurality of payment terminals (2) present at the service point (5).

4. Payment transaction method according to one of the claims 1 to 3, **characterised in that**, when determining the transaction identification, the payment terminal (2) inserts a service point identification into the transaction identification, and the total transaction amount is credited to the service point (5) identified through the service point identification.

5. Payment transaction method according to one of the claims 1 to 4, **characterised in that** indications about the mode of payment are inserted into the payment record before transmission of the payment record to the central transaction unit (4).

6. Payment transaction method according to one of the claims 1 to 5, **characterised in that** the payment terminal (2) transmits the transaction identification via a contactless device interface (21-11) directly to the mobile device (1), and the customer indicates the transaction identification to the mobile device (1) by accepting by means of operating elements (18) of the mobile device (1) the transaction identification received by the payment terminal (2) via the contactless device interface (21-11).

7. Payment transaction method according to one of the claims 1 to 6, **characterised in that** the customer authenticates himself with a biometric feature at his mobile device (1) before giving the transaction identification.

8. Payment transaction method according to one of the claims 1 to 7, **characterised in that** the solvency of the customer is checked at the central transaction unit (4).

9. Payment transaction system comprising one or more portable mobile devices (1) and one or more payment terminals (2) in at least one service point (5), as well as a central transaction unit (4), which mobile devices (1) and payment terminals (2) each comprise at least one processor (16, 26), which payment terminals (2) each comprise means (29) of informing a customer about a total transaction amount to be paid for a payment transaction and a transaction identification assigned to this payment transaction,
the payment terminals (2) each comprising a transaction placing module (23) which transaction placing module (23) in each case transmits the transaction identification and the total transaction amount for the respective payment transaction via a communication network (3) to the central transaction unit (4), **characterised in that**
the mobile devices (1) each comprise a transaction response module (13) which transaction response module (13) receives a transaction identification, for a respective payment transaction, indicated by a customer by means of operating elements (18) of the respective mobile device (1), and transmits it via a mobile radio network (6) to the central transaction unit (4), and
the central transaction unit (4) comprises a payment request module (42), which payment request module (42) transmits a payment request comprising at least the total transaction amount for the respective payment transaction via the mobile radio network (6) to the mobile device (1) from which mobile device (1) the transaction identification for the respective payment transaction was received.

10. System according to claim 9, **characterised in that** the mobile devices (1) comprise a payment record module (14) which payment record module (14) prepares a payment record comprising a linking of a received payment request to a customer identification for the customer, and transmits it over the mobile radio network (6) to the central transaction unit (4).

11. System according to one of the claims 9 or 10, **characterised in that** the payment terminals (2) each comprise a transaction identification module (22), which transaction identification module (22) determines in each case the transaction identification for a payment transaction and inserts in each case a payment terminal identification for the respective payment terminal (2) into the transaction identification.

12. System according to one of the claims 9 to 11, **characterised in that** the payment terminals (2) each comprise a transaction identification module (22), which transaction identification module (22) determines in each case the transaction identification for a payment transaction and inserts in each case a service point identification into the transaction identification, and the central transaction unit (4) comprises a crediting module (41), which crediting module credits to the service point (5) identified through the service point identification the total transaction amount for the respective payment transaction.

13. System according to one of the claims 10 to 12, **characterised in that** the payment record module (14) comprises means of inserting into the payment record indications about the mode of payment before transmitting the payment record to the central transaction unit (4).

14. System according to one of the claims 9 to 13, **characterised in that** the payment terminals (2) each comprise at least one transmitter (21) of a contactless device interface (21-11) and the mobile devices (1) each comprise at least one receiver (21) <sic. (11)> of the contactless device interface (21-11), via which contactless device interface (21-11) the transaction identification for the respective payment transaction is transmitted from the respective payment terminal (2) directly to the respective mobile device (1), and the transaction response module (13) comprises means of receiving an acceptance command entered by the respective customer by means of operating elements (18) of the respective mobile device (1) and of receiving the transaction identification for the respective payment transaction corresponding to the acceptance command.

15. System according to one of the claims 9 to 14, **characterised in that** the mobile devices (1) each comprise an authentication module (12) for receiving at least one biometric feature from a customer and authenticating the customer on the basis of the received biometric feature.

16. System according to one of the claims 9 to 15, **characterised in that** the central transaction unit (4) comprises a solvency checking module (43) which solvency checking module (43) checks the solvency of a customer.
